# EUROPEAN PATENT APPLICATION

(11) **EP 4 629 036 A1**
(43) Date of publication of application: **08.10.2025**
(21) Application number: 24792377.4
(22) Date of filing: 07.03.2024
(51) Int. Cl.: G06F 3/0338, G01L 1/26, G01L 5/16, G06F 3/041

(54) **INPUT DEVICE USING THREE-AXIS FORCE SENSOR**

(30) Priority: 20.04.2023 JP 2023069021
(71) Applicant: NISSHA CO., LTD., Kyoto-shi, Kyoto 604-8551 (JP)
(72) Inventor: WATAZU, Yuji, Kyoto-shi, Kyoto 604-8551 (JP); MIURA, Tsutomu, Kyoto-shi, Kyoto 604-8551 (JP)
(74) Representative: Hasegawa, Kan
(86) International application number: PCT/JP2024/008748
(87) International publication number: WO 2024/219101

(57) **Abstract**

[Problem] Provided is an input device using a three-axis force sensor capable of suppressing operation failure due to a temperature drift or a humidity drift.

[Solution] An input device according to the present invention includes a housing, a three-axis force sensor, and a control unit. The three-axis force sensor is disposed on a surface of the housing and detects a shearing force and a pressing force applied to an operation surface by a finger or a palm. The control unit calculates component forces F₁ to F₄ of the shearing force, respectively, for a plurality of input directions allocated in a plane of the operation surface. The control unit further calculates time change amounts with respect to the component forces F₁ to F₄ of a shearing force and a pressing force F_{Z}. Then, for example, when a time change amount DF1 exceeds a threshold Th₁ in the component force F₁, since a criterion that a time change amount DF_{Z} of the pressing force F_{Z} at time t₁₁ to time t₁₂ is a positive value is satisfied, the control unit activates an event on the assumption that an input has been performed in a direction to which the component force F₁ is allocated.

## Description

### Technical Field

The present invention relates to an input device using a three-axis force sensor capable of performing accurate load detection and suppressing operation failure due to a temperature drift or a humidity drift.

### Background Art

In recent years, a film-type three-axis force sensor has been known as a sensor that provides a user interface (UI) development site with a new idea that cannot be realized by a joystick, a cross key, a mouse, or a touch panel (see Non Patent Literatures 1 and 2).

The film-type three-axis force sensor can detect a pressing force (pressure) and a sliding force (friction/shearing force) by measuring forces in three-axis (XYZ axis) directions at contact points, and can input a motion that cannot be controlled by a conventional controller, such as twisting, turning, or shifting, using just one finger. Since it is possible to measure force (volume) beyond on/off determination, it is also possible to control a speed, a movement amount, and the like. Compared with a joystick or a cross key, a direction and a movement amount can be simultaneously input with only a slight movement of a finger. Furthermore, since the sensor is a thin and light film-type sensor, the sensor can also be mounted on a curved surface. Note that it is not necessary to measure all the forces in the three-axis directions, and for example, there may be a sensor that measures only the forces in the XY axis directions.

Examples of the film-type three-axis force sensor as described above include a capacitive sensor in which an upper electrode and a lower electrode are disposed to face each other with an air layer or an elastic layer interposed therebetween, and by using a change in a capacitance value generated by a change in a distance between the electrodes when a force is applied, the applied shearing force or pressing force is calculated (see Patent Literatures 1 and 2).

### Citation List

### Non Patent Literature

Non Patent Literature 1: "Friction/shearing force sensor |NISSHA", [online], Nissha Co., Ltd., connect.nissha.com, [searched on April 4, 2023], Internet <URL: https://connect.nissha.com/filmdevice/shear-force-sensor/> Non Patent Literature 2: "Film-type three-axis force sensor for UI |NISSHA", [online], Nissha Co., Ltd., connect.nissha.com, [searched on April 4, 2023], Internet <URL: https://connect.nissha.com/filmdevice/shear-force-sensor/ui/>

### Patent Literature

Patent Literature 1: WO 2020/059766 A
Patent Literature 2: JP 2017-156126 A

### Summary of Invention

### Technical Problem

In the input device using the three-axis force sensor as described above, an operator applies a force to an operation surface of the three-axis force sensor with a finger, and operates electronic equipment according to a direction and a magnitude of a shearing force of the force acting in a surface direction of the operation surface. For example, an event such as increasing the volume of a music player is activated at a timing when the magnitude of the shearing force detected by the three-axis force sensor exceeds a threshold.

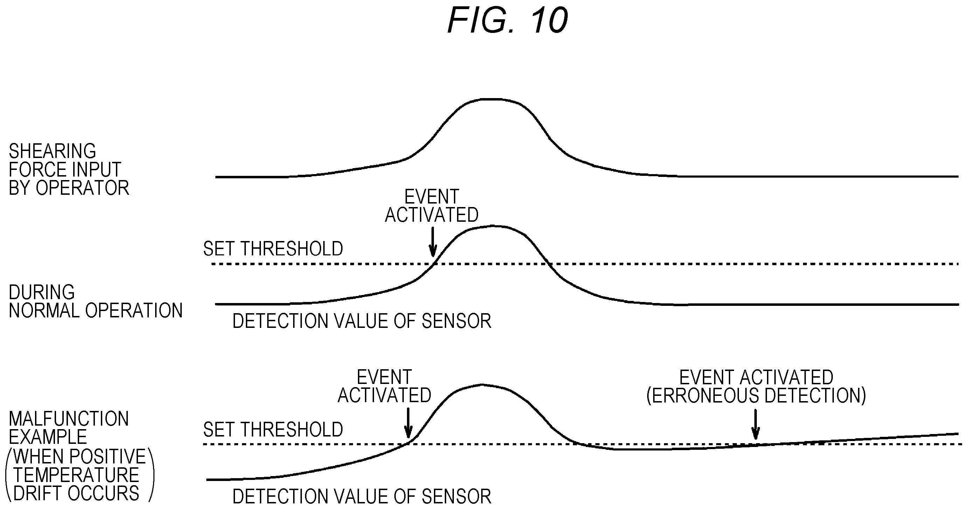

However, a detection value of the shearing force using the three-axis force sensor may cause a drift due to a change in temperature, humidity, or the like, which may cause operation failure such as erroneous detection or input failure. As an example, description will be made using Fig. 10. The upper part of Fig. 10 illustrates time transition of a shearing force when the operator applies the shearing force to the operation surface. The middle part and the lower part of Fig. 10 illustrate time transition of a detection value detected by the three-axis force sensor. When the input device using the three-axis force sensor is normally operating, as illustrated in the middle part of Fig. 10, when a shearing force exceeding a set threshold is detected, an event (the volume is increased in the above-described example) is activated. However, when the detection value of the shearing force drifts due to a change in temperature or humidity, as illustrated in the lower part of Fig. 10, this causes a problem that not only the detection value reaches the threshold with a smaller force and activates an event, but also the detection value reaches the threshold without pressing and activates an event.

Therefore, an object of the present invention is to solve the above problems and provide an input device using a three-axis force sensor capable of suppressing operation failure due to a temperature drift or a humidity drift.

### Solution to Problem

Hereinafter, a plurality of aspects will be described as means for solving the problems. These aspects can be combined in any manner if necessary.

An input device according to one aspect of the present invention includes a housing, a three-axis force sensor, and a control unit.

The three-axis force sensor is disposed on a surface of the housing and includes an operation surface. Furthermore, the three-axis force sensor detects, on the basis of a resistance value, a capacitance value, or an output charge that changes according to forces applied to the operation surface by a finger or a palm, a direction and a magnitude of a shearing force acting in a plane direction of the operation surface and a magnitude of a pressing force acting in a direction perpendicular to the operation surface among the forces.

The control unit is electrically connected to the three-axis force sensor and is housed inside the housing. Furthermore, the control unit activates an event on the basis of the shearing force and the pressing force detected by the three-axis force sensor. More specifically, the control unit calculates component force of the shearing force, respectively, for a plurality of input directions allocated in a plane of the operation surface. Moreover, the control unit calculates time change amounts with respect to the component forces in the allocation directions and the pressing force. Furthermore, when the time change amounts exceed respective thresholds in one or more of the component forces in the allocation directions, the control unit activates an event on the assumption that an input has been performed for a direction selected from the allocation directions in which the thresholds are exceeded using positive and negative of the time change amount of the pressing force at that time as a criterion.

In the above input device, the thresholds may be positive values. Furthermore, in the above input device, the thresholds may be negative values.

In the above input device, the criterion for selection from among the allocation directions in which the thresholds are exceeded can be set only in a case where the time change amount of the pressing force is positive. Furthermore, in the above input device, the criterion for selection from among the allocation directions in which the thresholds are exceeded may be set only in a case where the time change amount of the pressing force is negative. Furthermore, in the above input device, the criterion for selection from among the allocation directions in which the thresholds are exceeded may be a case where the time change amount of the pressing force is either positive or negative.

In the above input device, when the time change amounts of a plurality of the component forces in the allocation directions exceed the respective thresholds, the event may be activated on the assumption that the input has been performed only for an allocation direction in which the time change amount first exceeds the threshold.

In the above input device, when the time change amounts of all the component forces in the allocation directions do not exceed the respective thresholds, and the time change amount of only the pressing force exceeds the threshold, the event may be activated on the assumption that the input has been performed in a pushing direction.

In the above input device, each of the time change amounts may be a differential value. Furthermore, in the above input device, each of the time change amounts may be a high-pass filtered value.

In the above input device, the three-axis force sensor may include a flexible film-type sensor.

### Advantageous Effects of Invention

According to the input device using the three-axis force sensor of the present invention, since the control unit activates an event on the basis of the transition of the time change amounts of the component forces of the shearing force in each of the allocation directions of the operation surface, the thresholds, and the positive or negative of the transition of the time change amount of the pressing force, operation failure due to a temperature drift or a humidity drift can be suppressed.

### Brief Description of Drawings

Fig. 1 is a schematic diagram of a controller that is an example of an input device using a three-axis force sensor according to the present invention.
Fig. 2 is a configuration diagram of a main part of the input device using a three-axis force sensor according to the present invention.
Fig. 3 is an input example of the input device using a three-axis force sensor according to the present invention.
Fig. 4 is a waveform diagram illustrating a transition of each of values (thresholds are positive values) when an operator sequentially inputs the values in an allocation direction Dir1 and an allocation direction Dir2 in the input device using a three-axis force sensor according to the present invention.
Fig. 5 is a waveform diagram illustrating a transition of each of values (thresholds are negative values) when the operator sequentially inputs the values in the allocation direction Dir1 and the allocation direction Dir2 in the input device using a three-axis force sensor according to the present invention.
Fig. 6 is a waveform diagram illustrating a transition of each of values (thresholds are positive values) when the operator sequentially inputs the values in the allocation direction Dir1, the allocation direction Dir2, and a Z-axis direction in the input device using a three-axis force sensor according to the present invention.
Fig. 7 is a schematic diagram illustrating a configuration example of a capacitive film-type three-axis force sensor.
Fig. 8 is another input example of the input device using a three-axis force sensor according to the present invention.
Fig. 9 is a schematic diagram of another example of the input device using a three-axis force sensor according to the present invention.
Fig. 10 is a waveform diagram describing a malfunction due to a drift in an input device of the prior art.

### Description of Embodiments

### [First Embodiment]

Hereinafter, a first embodiment of the present invention will be described with reference to the drawings.

### (1) Overall structure of input device

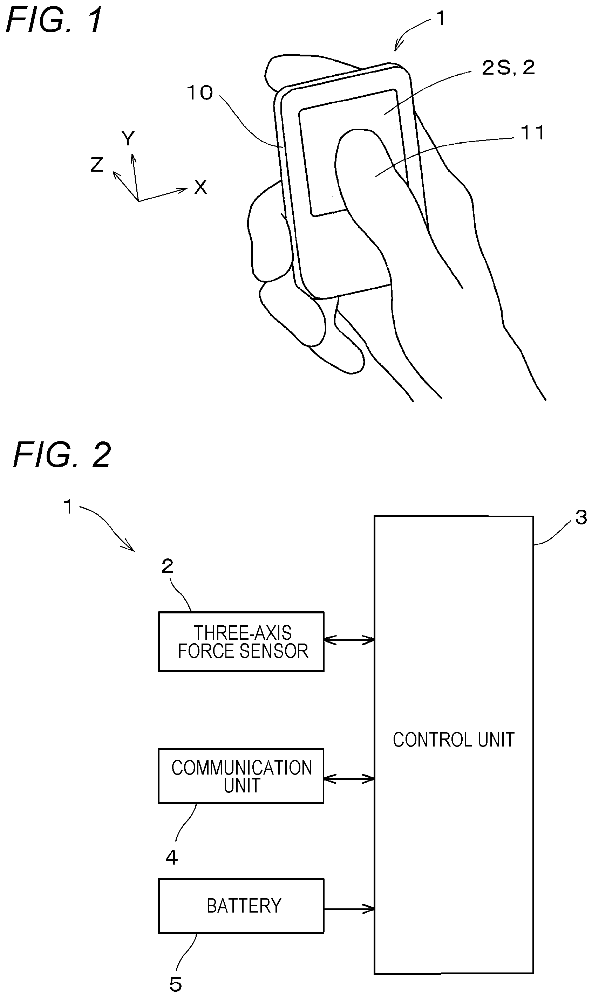

First, an overall structure of an input device 1 according to an embodiment of the present invention will be described with reference to Figs. 1 and 2. Fig. 1 is a schematic diagram of a controller that is an example of an input device using a three-axis force sensor according to the present invention. Fig. 2 is a configuration diagram of a main part of the input device using a three-axis force sensor according to the present invention.

The input device 1 includes a housing 10, a three-axis force sensor 2, a control unit 3, a communication unit 4, and a battery 5. (See Figs. 1 and 2).

As illustrated in Fig. 1, the three-axis force sensor 2 is disposed on a surface of the housing 10 and includes an operation surface 2S. The three-axis force sensor 2 detects a direction and a magnitude of a shearing force acting in a plane direction (XY axis direction in the example of Fig. 1) of the operation surface 2S and a magnitude of a pressing force acting in a direction perpendicular to the operation surface 2S (Z axis direction in the example of Fig. 1) among forces applied to the operation surface 2S by a finger 11.

The control unit 3 is housed in the housing 10 and is electrically connected to the three-axis force sensor 2 as illustrated in Fig. 2. The control unit 3 controls the three-axis force sensor 2 and activates an event on the basis of the shearing force and the pressing force detected by the three-axis force sensor 2.

The communication unit 4 is housed in the housing 10, is electrically connected to the control unit 3 as illustrated in Fig. 2, and is configured to communicate with an external electronic device (not illustrated).

The battery 5 is housed inside the housing 10 and supplies power to the control unit 3 as illustrated in Fig. 2.

Hereinafter, the function of each configuration described above will be described in more detail.

### (1) Housing

Examples of the material of the housing 10 include general-purpose resins such as polystyrene resin, polyolefin resin, ABS resin, AS resin, and AN resin. Furthermore, general-purpose engineering resins such as a polyphenylene oxide/polystyrene resin, a polycarbonate resin, a polyacetal resin, a polyacrylic resin, a polycarbonate-modified polyphenylene ether resin, a polybutylene terephthalate resin, a polybutylene terephthalate resin, and an ultra-high molecular weight polyethylene resin, and super engineering resins such as a polysulfone resin, a polyphenylene sulfide resin, a polyphenylene oxide resin, a polyarylate resin, a polyetherimide resin, a polyimide resin, a liquid crystal polyester resin, and a polyallyl heat-resistant resin can also be used.

### (2) Three-axis force sensor

As a method of the three-axis force sensor 2, a capacitance type, a piezoelectric type, a strain gauge type, and the like are generally known. Furthermore, a flexible film-type sensor is more preferable as the three-axis force sensor 2. As described above, since the film type sensor is thin and light, the film type sensor can be mounted even when the surface of the housing 10 on which the three-axis force sensor 2 is disposed is a curved surface.

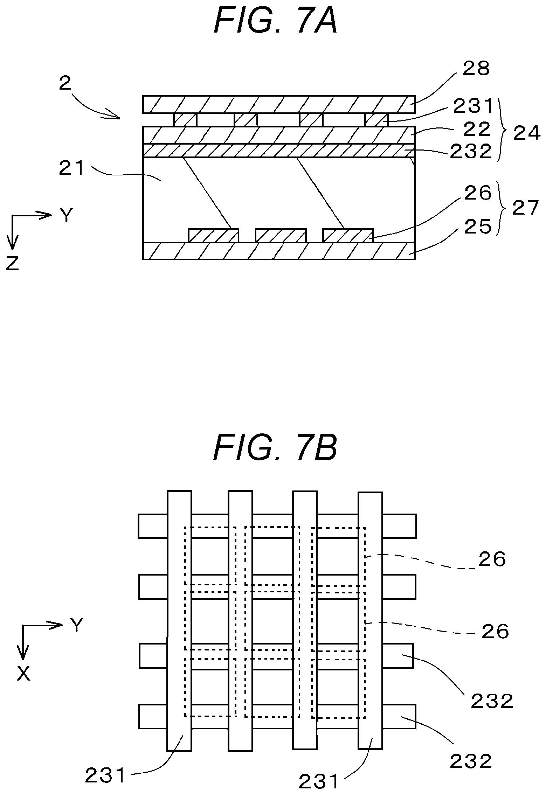

Hereinafter, the three-axis force sensor 2 of the present embodiment will be described by taking a film type of a capacitance type as an example. Fig. 7 is a schematic diagram illustrating the principle of a capacitive film-type three-axis force sensor.

In the three-axis force sensor 2 illustrated in Fig. 7, a lower electrode 26 of a lower electrode member 27 is formed in an island pattern formed on an upper surface of a lower support 25, an upper electrode 23 of an upper electrode member 24 is formed in two layers of a front-side upper electrode 231 and a back-side upper electrode 232 separately formed on both surfaces of an upper support 22 (see Fig. 7(a)), and the front-side upper electrode 231 and the back-side upper electrode 232 are formed in a plurality of linear patterns intersecting each other in a plan view (see Fig. 7(b)), and the island pattern of the lower electrode 26 can be disposed so as to partially overlap a linear pattern of the front-side upper electrode 231 and a linear pattern of the back-side upper electrode 232 in a plan view. In this case, as illustrated in Fig. 7(a), in order to protect the front-side upper electrode 231 of the upper electrode member 24, it is preferable to provide a protective layer 28 on a surface of the upper electrode member 24 on a side opposite to an elastic layer 21.

In the example illustrated in Fig. 11(b), the angle at which the front-side upper electrode 231 and the back-side upper electrode 232 intersect with each other is 90° (that is, orthogonal) such that the linear patterns of the front-side upper electrode 231 extend in the X-axis direction and are aligned in the Y-axis direction, and the linear patterns of the back-side upper electrode 232 extend in the Y-axis direction and are aligned in the X-axis direction, but is not limited thereto. In a case where the intersecting angles are orthogonal to each other, the pattern of the lower electrode 26 is a rectangular grid, and when the intersecting angles are not orthogonal to each other, the pattern of the lower electrode 26 is a parallelogram-shaped grid.

The three-axis force sensor 2 having such a configuration calculates the values of the applied force F_{XY} (with an arrow indicating a vector at the upper portion of the character) and F_{Z} using a change in the capacitance value generated by a change in the distance between the electrodes when the force is applied.

That is, when a force is applied to the upper electrode 23 obliquely downward by the finger 11 with respect to the surface of the three-axis force sensor 2, the elastic layer 21 is deformed, the front-side upper electrode 231 and the back-side upper electrode 232 of the upper electrode member 24 move in the horizontal direction (XY axis direction) and the vertical direction (Z axis direction) according to the strength of the force, the distance and the overlapping area between the island-shaped lower electrode 26 and the front-side upper electrode 231 and between the island-shaped lower electrode 26 and the back-side upper electrode 232 change, and as a result, the capacitance value between the electrodes changes. Therefore, if changes in the respective capacitance values are measured, the intensities of the applied forces F_{XY} (with an arrow indicating a vector above the character) and F_{Z} can also be measured.

Examples of the material constituting the upper support 22 and the lower support 25 include, but are not particularly limited to, thermoplastic or thermosetting resin sheets such as acrylic, urethane, fluorine, polyester, polycarbonate, polyacetal, polyamide, and olefin, and ultraviolet curable resin sheets such as cyanoacrylate. Since the three-axis film type force sensor 2 including the upper support 22 and the lower support 25 can be arranged along the shape of the housing 10, the three-axis film type force sensor 2 can also be mounted on, for example, a curved surface.

The front-side upper electrode 231, the back-side upper electrode 232, and the lower electrode 26 can include a material having conductivity. Examples of the material having conductivity include, but are not particularly limited to, metal films of gold, silver, copper, platinum, palladium, aluminum, rhodium and the like, and conductive paste films obtained by dispersing these metal particles, conductive materials such as metal nanofibers and carbon nanotubes in a resin binder. In the case of a metal film, examples of the forming method include a method in which a conductive film is entirely formed by a plating method, a sputtering method, a vacuum vapor deposition method, an ion plating method, or the like, and then patterned by etching, and in the case of a conductive paste film, examples of the forming method include a method in which a pattern is directly formed by a printing method such as a screen, a gravure, or an offset.

Examples of the elastic layer 21 include elastic synthetic resin sheets such as silicone, fluorine, urethane, epoxy, ethylene-vinyl acetate copolymer, polyethylene, polypropylene, polystyrene, and butadiene rubber, and stretchable nonwoven fabric sheets. In particular, silicone resin-based elastic sheets such as silicone gels and silicone elastomers are more preferable because they are excellent in durability and elasticity in a wide temperature range from a low temperature to a high temperature. Note that the elastic layer 21 is not limited to one formed into a sheet by a general sheet forming method such as extrusion molding, and may be a coating layer formed by printing, a coater, or the like.

Furthermore, as the material of the protective layer 28, the same material as the material constituting the upper support 22 and the lower support 25 of the first embodiment can be used. Furthermore, a design property can also be imparted by bonding a design sheet, leather, rubber, cloth, or the like as the protective layer 28.

### (3) Control unit

Although not illustrated, the control unit 3 includes, for example, a substrate and a CPU, a RAM, a ROM, and other electronic components mounted on the substrate. Furthermore, the control unit 3 is a device for controlling another device on the basis of hardware and software including a central processing unit (CPU) and a memory.

As described above, the control unit 3 controls the three-axis force sensor 2 and activates an event on the basis of the shearing force and the pressing force detected by the three-axis force sensor 2. More specific features of the present invention are as follows.

First, the control unit 3 calculates the component force of the shearing force for each of the plurality of input directions allocated in the plane of the operation surface 2S of the three-axis force sensor 2.

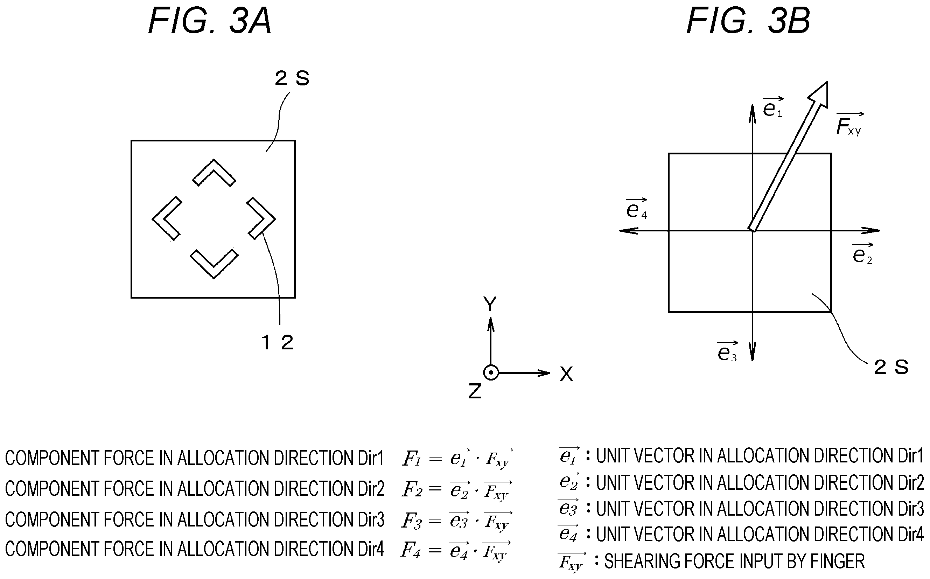

The component force of the shearing force will be described below by using, as an example, an example in which the operation surface 2S of the three-axis force sensor 2 is a plane, and input directions are allocated to four directions of upper, lower, left, and right in plan view (see Fig. 3). Here, the upward direction in the allocation direction is referred to as Dir1, and clockwise directions are referred to as Dir2, Dir3, and Dir4, respectively. That is, in the present embodiment, the allocation directions Dir1 and Dir3 coincide with the Y-axis direction, and the allocation directions Dir2 and Dir4 coincide with the X-axis direction.

In the example illustrated in Fig. 3(a), a texture 12 (dogleg arrow represented by ">" in the drawing) indicating the input direction Dir1 to Dir4 is provided on the operation surface 2S of the three-axis force sensor 2 (in a case where the protective layer 28 is provided, the upper surface thereof), and the operator can easily recognize the input direction by touching or visually recognizing the texture 12 with the finger 11.

Considering the operation surface 2S as an XY plane, the component forces F₁ to F₄ in the respective allocation directions of the shearing force F_{XY} (with an arrow indicating a vector at the upper part of the character) can be calculated from the inner product of the unit vectors e₁ to e₄ (with a right arrow at the upper part of the character) in the four directions and the shearing force F_{XY} (with an arrow indicating a vector at the upper part of the character) input by the finger 11 (see Fig. 3(b)).

Moreover, the control unit 3 calculates the time change amount DF_{Z} and the time change amounts DF₁ to DF₄ for the component forces F₁ to F₄ in the allocation directions Dir1 to Dir4 of the pressing force F_{Z} and the shearing force F_{XY}.

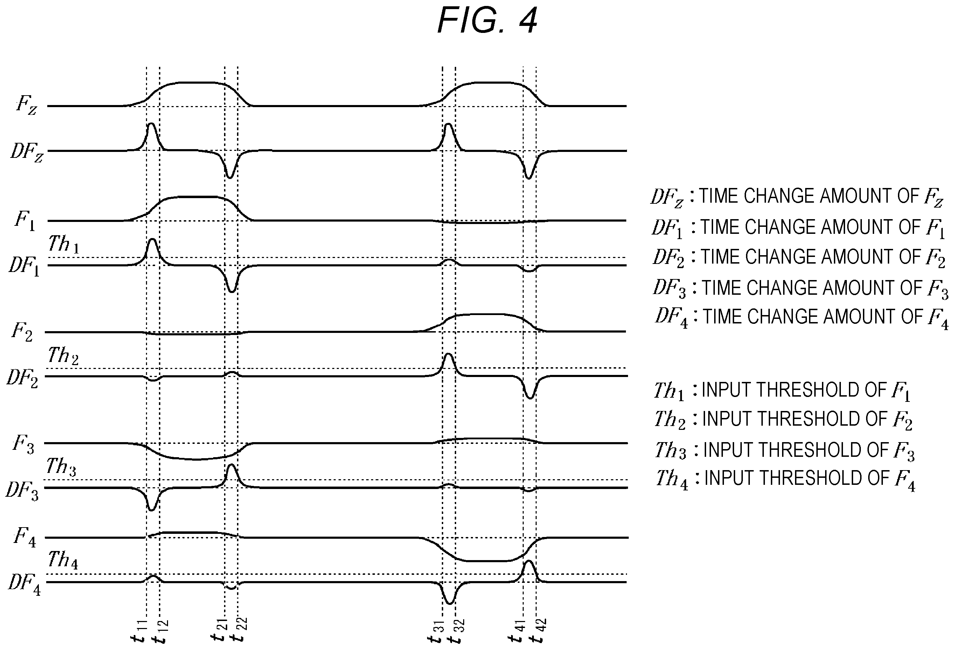

Fig. 4 is a waveform diagram illustrating a transition of each of values (thresholds are positive values) when an operator sequentially inputs the values in the allocation direction Dir1 and the allocation direction Dir2 in the input device using a three-axis force sensor according to the present invention. That is, the graph illustrates the transition of the component forces F₁ to F₄ in the respective allocation directions of the pressing force F_{Z} and the shearing force and the transition of the time change amount DF_{Z} and the time change amounts DF₁ to DF₄ when the operator performs an operation of continuously inputting to the right after inputting to the operation surface 2S upward in plan view.

Here, the time change amount of the force is a change amount of the force applied per minute time. That is, it can be expressed as a differential value of force.

Since the temperature drift and the humidity drift, which are problems, are slow changes (deviations) in the detection value, the deviations are not included in each of the time change amount DF_{Z} and the time change amounts DF₁ to DF₄. Therefore, even if a temperature drift or a humidity drift occurs in the values detected by the three-axis force sensor 2, only the input by the finger 11 can be detected according to the time change amount DF_{Z} and the time change amounts DF₁ to DF₄.

Meanwhile, as a method of detecting the input in each allocation direction, there are two methods depending on the detection timing. That is, there are a method of detecting the moment when the operator starts applying force in each direction and a method of detecting the moment of unloading after the application. Hereinafter, the former will be referred to as "application detection", and the latter will be referred to as "unloading detection".

In the present embodiment, a case where the method of detecting the input in each allocation direction is application detection will be described in time series with reference to Fig. 4.

Broken lines Th₁ to Th₄ horizontal to the time axis of the waveform in Fig. 4 are thresholds for the time change amounts DF₁ to DF₄ of the component forces F₁ to F₄ in the respective allocation directions, and are set to positive values. Furthermore, the pressing force F_{Z} is detected as a positive value when being pushed down.

In the application detection, only when the time change amounts DF₁ to DF₄ exceed the respective thresholds Th₁ to Th₄ at one or more of the component forces F₁ to F₄ in the respective allocation directions, and the time change amount DF_{Z} of the pressing force F_{Z} at that time is a positive value, the control unit 3 activates an event on the assumption that an input has been made for the allocation direction exceeding the threshold. Note that, in a case where the thresholds Th₁ to Th₄ are positive values, exceeding the thresholds Th₁ to Th₄ means taking a large value exceeding the thresholds Th₁ to Th₄. Furthermore, the reason why selection is performed from among the allocation directions exceeding the thresholds Th₁ to Th₄ on the basis of the positive/negative of the time change amount DF_{Z} of the pressing force F_{Z} (in the present embodiment, it is required that the time change amount DF_{Z} is a positive value) is that an event not intended by the operator is not activated only because the time change amount DF_{Z} exceeds the threshold.

In the input example illustrated in Fig. 4, first, the operator strengthens the force in the upward direction (allocation direction Dir1), and the component force F₁ of the shearing force increases (the rising start of the mountain on the left side in the drawing).

Then, at time t₁₁, the time change amount DF₁ at Dir1 exceeds Th₁. Moreover, when a certain degree of force is applied, the operator does not further strengthen the force, and thus the time change amount DF₁ becomes a value less than or equal to Th₁ after time t₁₂. On the other hand, when the force is increased in the upward direction, the force of naturally pushing the operation surface 2S is also increased, and the pressing force F_{Z} is also increased. Then, the time change amount DF_{Z} is a positive value (during the increase of the pressing force) between previous time t₁₁ and time t₁₂. Therefore, in the present embodiment, the control unit 3 determines that an input in the middle of application to the allocation direction Dir1 has been detected between time t₁₁ and time t₁₂, and activates an event.

Thereafter, the time change amount DF₃ in not Dir1 but Dir3 exceeds Th₃ between time t₂₁ to time t₂₂ at which the operator unloads. However, the time change amount DF_{Z} is a negative value (during the decrease of the pressing force) during the period from time t₂₁ to time t₂₂. Therefore, during the period from time t₂₁ to time t₂₂, the control unit 3 determines that no input during application to Dir3 is detected, and does not activate the event.

For example, in the case of the operation of the music player, the content of the event to be activated is raising/lowering of the volume, music forwarding/rewinding, and the like. Furthermore, feedback of input reception to the operator is also included. The feedback means, for example, giving a tactile sensation to the operator by vibrating the entire controller or the operation surface 2S, making a sound, or displaying on a GUI such as a monitor.

Furthermore, the event may be activated only once at time t₁₁ or time t₁₂, or may be activated several times between time t₁₁ and time t₁₂. Furthermore, the activation content may be changed according to the integral value of the time change amount DF₁ from time t₁₁ to time t₁₂ or the absolute value of the peak value. For example, in a case where the value is large, the volume is greatly raised and lowered at a time, and in a case where the value is small, the volume is raised and lowered small.

Returning to Fig. 4, also in a case where the operator continuously inputs in the right direction (allocation direction Dir2), the detection is performed similarly to the case of inputting in the upward direction (allocation direction Dir1).

That is, the operator strengthens the force in the right direction (allocation direction Dir2), and the component force F₂ of the shearing force increases (the rising start of the mountain on the right side in the drawing).

Then, the time change amount DF₂ exceeds Th₂ at time t₃₁. Furthermore, when a certain degree of force is applied, the operator does not further strengthen the force, and thus the time change amount DF₂ becomes a value equal to or less than Th₂ after time t₃₂. On the other hand, when the force is increased in the right direction, the force of naturally pushing the operation surface 2S is also increased, and the pressing force F_{Z} is also increased. The time change amount DF_{Z} is a positive value (during the increase of the pressing force) between previous time t₃₁ and time t₃₂. Therefore, the control unit 3 determines that the input to the allocation direction Dir2 is detected between times t₃₁ to time t₃₂, and activates the event.

Thereafter, the time change amount DF₄ in not Dir2 but Dir4 exceeds Th₃ between time t₄₁ to time t₄₂ at which the operator unloads. However, the time change amount DF_{Z} is a negative value (during the decrease of the pressing force) during the period from time t₄₁ to time t₄₂. Therefore, during the period from time t₄₁ to time t₄₂, the control unit 3 determines that no input during application to Dir4 is detected, and does not activate the event.

The content of the event to be activated at this time is different from that in the case of inputting in the allocation direction Dir1.

### (4) Communication unit

The communication unit 4 communicates with an external electronic device via wireless communication such as Wi-Fi (registered trademark), BLUETOOTH (registered trademark), or NFC. The communication unit 4 can communicate unidirectionally or bidirectionally. Note that the controller that is the input device 1 of the present embodiment can also control a plurality of external electronic devices at the same time or individually.

External electronic devices that communicate may be, for example, without limitation, head-mounted displays or smart glasses for use in xR, as well as smart televisions, laptop computers, desktop computers, tablet computers, automotive audio systems, home, work, or environmental automated controllers, or any other such device or system.

### (5) Battery

As the battery 5, a rechargeable battery such as a lithium battery can be used. In the case of the rechargeable battery, the user can charge the battery through the USB or simply by placing the input device 1 on the charging pad. Furthermore, a non-rechargeable battery may be used as the battery 9, and the battery 9 may be taken out from the inside of the housing 10 and replaced.

As described above, the input device 1 using the three-axis force sensor 2 according to the present embodiment activates an event on the basis of the transition of the time change amounts DF₁ to DF₄ of the component forces F₁ to F₄ of the shearing force in the respective allocation directions Dir1 to Dir4 of the operation surface 2S, the thresholds Th₁ to Th₄ which are positive values, and the positive and negative of the transition of the time change amount DF_{Z} of the pressing force F_{Z}, so that operation failure due to a temperature drift or a humidity drift can be suppressed.

### [Second Embodiment]

Hereinafter, a second embodiment of the present invention will be described based on Fig. 4 which is the same as the first embodiment.

An input device of the present embodiment is different from that of the first embodiment in that a method of detecting an input in each allocation direction is unloading detection.

That is, although Th₁ to Th₄ are set to positive values similarly to the first embodiment, in the unloading detection, a condition that the time change amount DF_{Z} is a negative value (during the decrease of the pressing force) during the time when the threshold is exceeded is set as a condition for activating the event.

In the input example illustrated in Fig. 4, first, the operator strengthens the force in the upward direction (allocation direction Dir1), and the component force F₁ of the shearing force increases (the rising start of the mountain on the left side in the drawing).

Between time t₁₁ and time t₁₂, the time change amount DF₁ at Dir1 exceeds Th₁, but the time change amount DF_{Z} at this time is a positive value (during the increase of the pressing force). Therefore, in the present embodiment, the control unit 3 determines that no input during unloading has been detected in the allocation direction Dir1 between time t₁₁ and time t₁₂, and does not activate the event.

Between subsequent time t₂₁ and time t₂₂, the time change amount DF₃ in Dir3 in the direction opposite to Dir1 exceeds Th₃, and the time change amount DF_{Z} in this time is a negative value (during reduction of the pressing force). Therefore, in the present embodiment, the control unit 3 determines that an input in the middle of unloading to the allocation direction Dir3 is detected between times t₂₁ to time t₂₂, and activates the event.

Subsequently, in the input example illustrated in Fig. 4, the operator strengthens the force in the right direction (allocation direction Dir2), and the component force F₂ of the shearing force increases (the rising start of the mountain on the right side in the drawing).

Between time t₃₁ and time t₃₂, the time change amount DF₂ at Dir2 exceeds Th₂, but the time change amount DF_{Z} at this time is a positive value (during the increase of the pressing force). Therefore, in the present embodiment, the control unit 3 determines that no input during unloading has been detected in the allocation direction Dir2 between times t₃₁ and time t₃₂, and does not activate the event.

Between subsequent times t₄₁ and time t₄₂, the time change amount DF₄ in Dir4 in the direction opposite to Dir2 exceeds Th₄, and the time change amount DF_{Z} in this time is a negative value (during reduction of the pressing force). Therefore, in the present embodiment, the control unit 3 determines that the input in the middle of unloading to the allocation direction Dir4 is detected between times t₄₁ to time t₄₂, and activates the event.

As described above, in the present embodiment, similarly to the first embodiment, although the operator performs the operation of inputting to the operation surface 2S in the upward direction (allocation direction Dir1) in plan view and then continuously inputting to the right direction (allocation direction Dir2), the event activation is performed by detecting the event activation as the input to the allocation directions Dir3 and Dir4. However, there is no problem as long as the action on the operation surface by the operator finally corresponds to the content of the event activation intended by the operator on a one-to-one basis.

Note that, in the case of the application detection, when the operator slowly applies the force, the peak representing the time change amount of each component force of the shearing force becomes small, and it becomes difficult to exceed the set threshold. That is, the input may not be detected. Therefore, it is necessary for the operator to quickly approach the operation surface 2S of the three-axis force sensor 2 with the finger 11 to a predetermined location of the operation surface 2S, to contact the operation surface 2S, and to apply a force. However, it is burdensome for the operator to quickly perform a series of operations from a state where the finger 11 is not in contact.

On the other hand, in the case of unloading detection, there is an advantage that the burden on the operator is small since only the motion of quickly releasing the finger 11 from the operation surface 2S after applying the force is performed.

Other points are the same as those of the first embodiment, and thus description thereof is omitted.

### [Third Embodiment]

Hereinafter, a third embodiment of the present invention will be described with reference to the drawings.

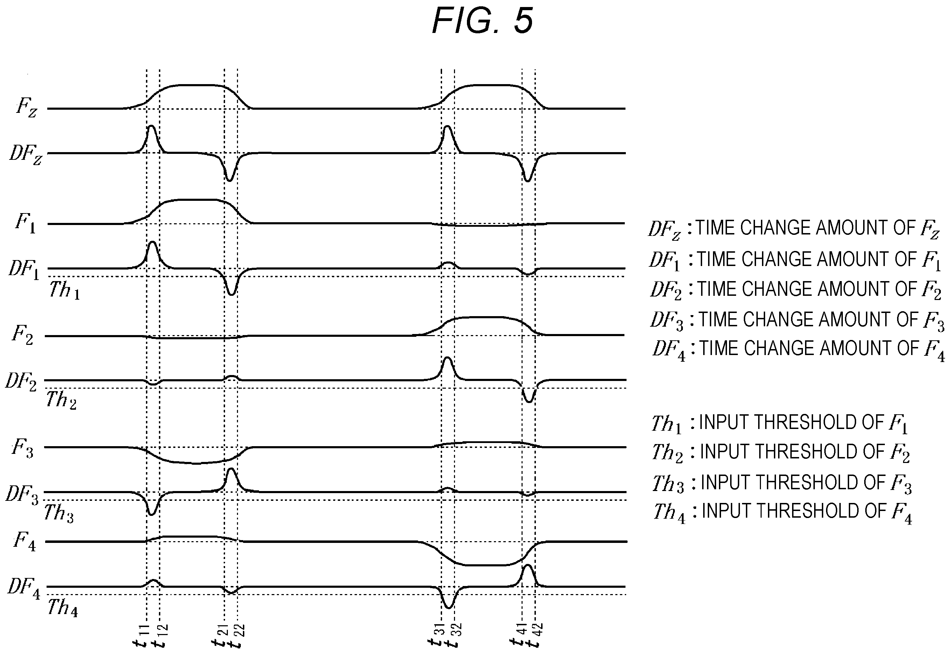

The input device of the present embodiment is different from that of the first embodiment in two respects, that the thresholds Th₁ to Th₄ are negative values, and the method of detecting an input in each allocation direction is unloading detection (see Fig. 5).

Broken lines Th₁ to Th₄ horizontal to the time axis of the waveform in Fig. 5 are thresholds for the time change amounts DF₁ to DF₄ of the component forces F₁ to F₄ in the respective allocation directions, and are set to negative values. Furthermore, the pressing force F_{Z} is detected as a positive value when being pushed down.

In the unloading detection, only when the time change amounts DF₁ to DF₄ exceed the respective thresholds Th₁ to Th₄ in one or more of the component forces F₁ to F₄ in the respective allocation directions, and the time change amount DF_{Z} of the pressing force F_{Z} at that time is a negative value, the control unit 3 activates an event on the assumption that an input has been performed for the allocation directions in which the thresholds are exceeded. Note that, in a case where the thresholds Th₁ to Th₄ are negative values, exceeding the thresholds Th₁ to Th₄ means taking a small value below the thresholds Th₁ to Th₄.

In the input example illustrated in Fig. 5, first, the operator strengthens the force in the upward direction (allocation direction Dir1) and then weakens the force (until the start of lowering of the mountain on the left side in the drawing), but the time change amount DF₁ does not exceed Th₁ before time t₂₁. The time change amount DF₁ exceeds Th₁ only at time t₂₁. Moreover, when a certain level of force is unloaded, the operator does not further weaken the force, and thus the time change amount DF₁ becomes a value equal to or larger than Th₁ after time t₂₂. On the other hand, when the force is increased in the upward direction, the force of naturally pushing the operation surface 2S is also increased, and the pressing force F_{Z} is also increased. Then, the time change amount DF_{Z} is a negative value (during the decrease of the pressing force) between previous time t₂₁ and time t₂₂. Therefore, in the present embodiment, the control unit 3 determines that the input in the middle of unloading in the allocation direction Dir1 is detected between time t₂₁ to time t₂₂, and activates the event.

Note that the time change amount DF₃ exceeds Th₃ also between time t₁₁ to time t₁₂ applied by the operator. However, during the period from time t₁₁ to time t₁₂, the time change amount DF_{Z} is a positive value (during the increase of the pressing force). Therefore, in the present embodiment, the control unit 3 determines that the input in the middle of unloading in the allocation direction Dir3 is not detected between time t₁₁ to time t₁₂, and does not activate the event.

Similarly to the case of inputting in the upward direction (allocation direction Dir1), the case where the operator inputs in the right direction (allocation direction Dir2) following the input in the upward direction (allocation direction Dir1) is also detected.

That is, as illustrated in Fig. 5, the operator strengthens the force in the right direction (allocation direction Dir2) and then weakens the force (until the start of lowering of the mountain on the right side in the drawing), but the time change amount DF₂ does not exceed Th₂ before time t₄₁. The time change amount DF₂ exceeds Th₂ only at time t₄₁. Furthermore, when a certain level of force is unloaded, the operator does not further strengthen the force, and thus the time change amount DF₂ becomes a value larger than or equal to Th₂ after time t₄₂. On the other hand, when the force is increased in the right direction, the force of naturally pushing the operation surface 2S is also increased, and the pressing force F_{Z} is also increased. The time change amount DF_{Z} is a negative value (during the decrease of the pressing force) between previous time t₄₁ and time t₄₂. Therefore, in the present embodiment, the control unit 3 determines that an input during unloading in the allocation direction Dir2 is detected between time t₄₁ and time t₄₂, and activates the event.

Note that the time change amount DF₄ exceeds Th₄ also between time t₃₁ to time t₃₂ applied by the operator. However, during the period from time t₃₁ to time t₃₂, the time change amount DF_{Z} is a positive value (during the increase of the pressing force). Therefore, in the present embodiment, the control unit 3 determines that the input in the middle of unloading to the allocation direction Dir4 is not detected between time t₃₁ to time t₃₂, and does not activate the event.

Other points are the same as those of the first embodiment, and thus description thereof is omitted.

### [Fourth Embodiment]

Hereinafter, a fourth embodiment of the present invention will be described on the basis of Fig. 5 which is the same as the third embodiment.

The input device of the present embodiment is different from that of the third embodiment only in that a method of detecting an input in each allocation direction is application detection.

That is, similarly to the third embodiment, Th₁ to Th₄ are set to negative values, but a condition that the time change amount DF_{Z} is a positive value (in the middle of increasing the pressing force) during the time when the threshold is exceeded is set as a condition for activating the event.

Therefore, in the present embodiment, the control unit 3 determines that an input in the middle of application to the allocation direction Dir3 has been detected between time t₁₁ and time t₁₂, and activates an event. Furthermore, the control unit 3 determines that an input in the middle of application to the allocation direction Dir1 is not detected between subsequent time t₂₁ and time t₂₂, and does not activate the event.

Furthermore, in the present embodiment, the control unit 3 determines that an input in the middle of application to the allocation direction Dir4 is detected between time t₃₁ and time t₃₂, and activates an event. Furthermore, the control unit 3 determines that an input in the middle of application to the allocation direction Dir2 is not detected between subsequent time t₄₁ and time t₄₂, and does not activate the event.

Also in the present embodiment, similarly to the second embodiment, the input operation is detected as an input to the allocation directions Dir3 and Dir4 contrary to the operator's input operation. However, as described above, there is no problem as long as the action on the operation surface by the operator finally corresponds to the content of the event activation intended by the operator on a one-to-one basis.

Other points are the same as those of the first embodiment, and thus description thereof is omitted.

### [Example of change]

Although embodiments of the present invention have been described above, the present invention is not limited to the above embodiments, and various modifications can be made without departing from the gist of the invention. In particular, the plurality of embodiments and modifications described in the present specification can be combined in any manner as necessary.
(a) In each of the above embodiments, when the time change amounts DF₁ to DF₄ exceed the thresholds, the fact that the time change amount DF_{Z} is a positive value or a negative value between the times is described as a condition for activating the event. However, the input device 1 of the present invention is not limited to this. For example, the event may be activated in either case that the time change amount DF_{Z} of the pressing force is positive or negative. That is, both the application detection and the unloading detection are performed.
   In a case where the application detection and the unloading detection are used together, for example, vibration is applied to the operator at both timings of application and unloading, and feedback of a feeling as if the operator actually touches an object such as a button (a technology called haptics) is activated as an event, so that the operational feeling of the controller is improved. Furthermore, by performing detection at both the application timing and the unloading timing, even if detection cannot be performed at one timing, detection can be performed at the other timing, so that there is also an advantage that input can be reliably performed.
(b) In each of the above embodiments, as illustrated in Figs. 4 and 5, at four timings (time t₁₁ to time t₁₂, time t₂₁ to time t₂₂, time t₃₁ to time t₃₂, and time t₄₁ to time t₄₂) in time series, the time change amounts DF₁ to DF₄ exceed the respective thresholds Th₁ to Th₄ in only one of the component forces F₁ to F₄ in the allocation directions Dir1 to Dir4, but the input device 1 of the present invention is not limited thereto. For example, timings at which the component forces F₁ to F₄ exceed the thresholds Th₁ to Th₄ may overlap (not illustrated).

In this manner, when the time change amounts DF₁ to DF₄ among the plurality of component forces F₁ to F₄ overlap each other in terms of time and exceed the respective thresholds Th₁ to Th₄, the event may be activated assuming that the input has been performed only in the allocation direction in which the time change amount first exceeds the threshold.

Furthermore, when the time change amounts DF₁ to DF₄ of a plurality of the component forces F₁ to F₄ overlap each other in terms of time and exceed the respective thresholds Th₁ to Th₄, an event may be activated on the assumption that the input has been performed for all the allocation directions in which the thresholds are exceeded.

(c) In each of the above embodiments, the event is activated only when the time change amounts DF₁ to DF₄ exceed the respective thresholds Th₁ to Th₄ in the component forces F₁ to F₄ in the allocation directions Dir1 to Dir4, but the input device 1 of the present invention is not limited thereto. For example, when the time change amounts DF₁ to DF₄ of all the shearing force component forces F₁ to F₄ do not exceed the respective thresholds Th₁ to Th₄, and the time change amount DF_{Z} of only the pressing force F_{Z} exceeds the threshold Thz, an event may be activated on the assumption that the input has been performed in a pushing direction (Z direction in the case of the XY plane).

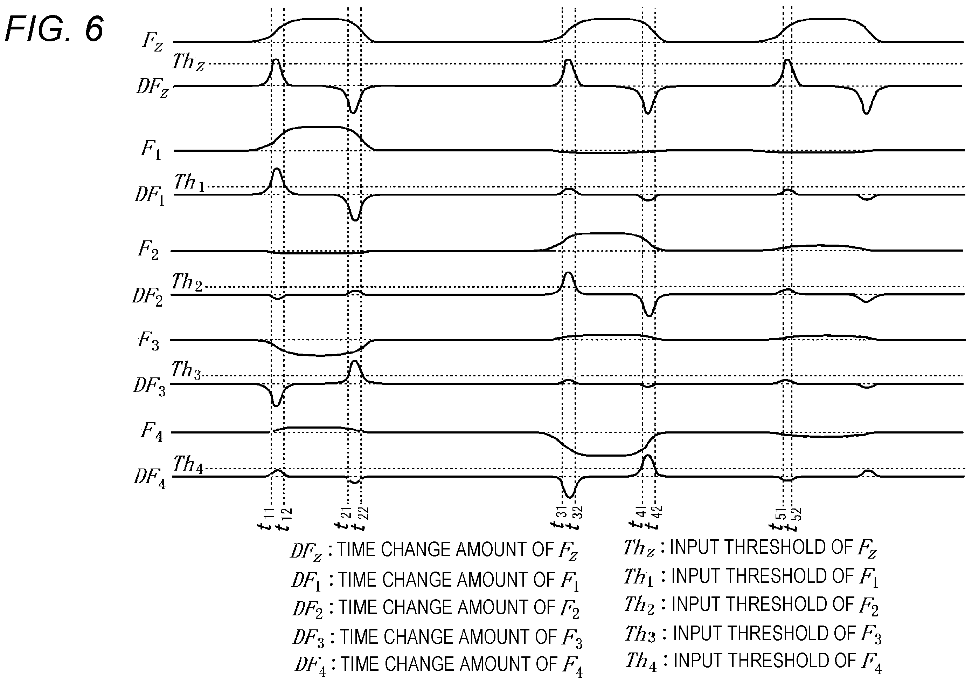

Fig. 6 is a diagram describing the state, and is different from Fig. 4 in that a pushing input in the Z direction is added and a threshold Thz for a time change amount DF_{Z} of the pressing force is provided. When the time change amounts DF₁ to DF₄ of the shearing force do not exceed the respective thresholds Th₁ to Th₄ and the time change amount DF_{Z} of the pressing force exceeds the threshold value Thz, it is determined that the pushing input in the Z direction is also detected and an event is activated. The period from time t₅₁ to time t₅₂ in Fig. 6 is the detection period.

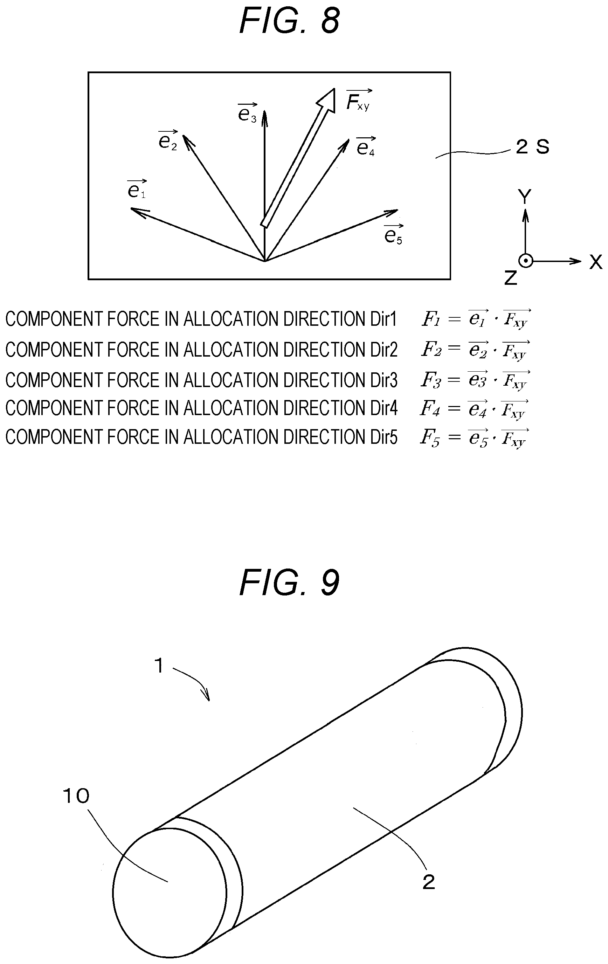

(d) In each of the above embodiments, with respect to the component force of the shearing force F_{XY} (with an arrow indicating a vector at the upper portion of a character), the case where the input directions are allocated to four directions of up, down, left, and right in plan view with respect to the operation surface 2S (XY plane) of the three-axis force sensor 2 has been described (see Fig. 3). However, the input device 1 of the present invention is not limited thereto, and the input direction can be allocated to any direction. For example, as illustrated in Fig. 8, input directions may be allocated to five directions spreading like a rib of a fan.

In the example illustrated in Fig. 8, out of the allocation directions, a direction at a left end is Dir1, and clockwise directions are Dir2, Dir3, Dir4, and Dir5, respectively. That is, in the example illustrated in Fig. 8, the unit vectors e₁ to e₂ and e₄ to e5 (with a right arrow at the upper part of the figure) of the allocation directions Dir1 to Dir2 and Dir4 to Dir5 include both components in the X-axis direction and the Y-axis direction. The unit vector e₃ of the allocation direction Dir3 coincides with the Y-axis direction.

In this case, the component forces F₁ to F5 in the respective allocation directions of the shearing force F_{XY} (with an arrow indicating a vector at the upper part of the character) are calculated from the inner product of the unit vectors e₁ to e5 (with a right arrow at the upper part of the character) in the five directions and the shearing force F_{XY} (with an arrow indicating a vector at the upper part of the character) input by the finger 11 (see Fig. 8).

When the input directions as illustrated in Fig. 8 are allocated, the input can be performed using five fingers 11 of one hand at the same time.

Furthermore, the number of input directions allocated to the input device 1 according to the present invention may be three or less or six or more.

(e) In each of the above embodiments, the respective time change amounts DF₁ to DF₄ and DF_{Z} have been described as differential values of the component forces F₁ to F5 of the shearing force and the pressing force F_{Z}, but the input device 1 of the present invention is not limited thereto. For example, the time change amounts DF₁ to DF₄ and DF_{Z} may be values obtained by applying a high-pass filter to the component forces F₁ to F5 of the shearing force and the pressing force Fz.

(f) In each of the above embodiments, the operation surface 2S of the three-axis force sensor 2 has been described as a flat surface. However, in the input device 1 of the present invention, the operation surface 2S of the three-axis force sensor 2 may be a curved surface.

For example, the film-type three-axis force sensor 2 may be wound around an outer peripheral surface of the cylindrical or tubular housing 10 (see Fig. 9).

(g) In each of the above embodiments, the three-axis force sensor 2 has been described as an example of a capacitance film type, but the input device 1 of the present invention is not limited thereto. For example, as a method of the three-axis force sensor 2, a known method such as a piezoelectric method based on a change in output charge or a strain gauge method based on a change in resistance value can be used. Furthermore, the same capacitance type may be different from the configuration and the detection principle illustrated in Fig. 7. Moreover, the three-axis force sensor 2 may not be a flexible film type.

(h) In each of the above embodiments, it has been described that the input is performed by the finger 11 to the three-axis force sensor 2, but the input device 1 of the present invention is not limited thereto. For example, in a case where the film-type three-axis force sensor 2 is wound around the outer peripheral surface of the cylindrical housing 10 described in (f) above, an input may be performed with a palm while gripping the housing 10.

(i) In each of the above embodiments, an example in which the input device 1 is a controller that operates an external electronic device by communication has been described, but the input device 1 of the present invention is not limited to such a controller. For example, the input device 1 may be integral with a head-mounted display or smart glasses for use in the aforementioned xR, as well as a smart television, a laptop computer, a desktop computer, a tablet computer, an automotive audio system, a home, work or environmental automated control device, or any other such device. In this case, the communication unit 4 is unnecessary. Furthermore, the battery 5 may be omitted. Moreover, a display device such as an LCD, a microphone, a speaker, or the like may be provided.

Furthermore, the input device 1 may be a controller that operates an external electronic device by wire such as a USB cable.

### Reference Signs List

1: input device (controller)
2: three-axis force sensor
2S: operation surface
21: elastic layer
22: upper support
231: front-side upper electrode
232: back-side upper electrode
24: upper electrode member
25: lower support
26: lower electrode
27: lower electrode member
28: protective layer
3: control unit
4: communication unit
5: battery
10: housing
11: finger
12: texture

## Claims

1. An input device using a three-axis force sensor, the input device comprising:
a housing;
a three-axis force sensor that is disposed on a surface of the housing, includes an operation surface, and detects, on a basis of a resistance value, a capacitance value, or an output charge that changes according to forces applied to the operation surface by a finger or a palm, a direction and a magnitude of a shearing force acting in a plane direction of the operation surface and a magnitude of a pressing force acting in a direction perpendicular to the operation surface among the forces; and
a control unit that is electrically connected to the three-axis force sensor, is housed inside the housing, and activates an event on a basis of the shearing force and the pressing force detected by the three-axis force sensor,
wherein the control unit
calculates component forces of the shearing force, respectively, for a plurality of input directions allocated in a plane of the operation surface,
further calculates time change amounts with respect to the component forces in the allocation directions and the pressing force, and
when the time change amounts exceed respective thresholds in one or more of the component forces in the allocation directions, activates the event on an assumption that an input has been performed for a direction selected from the allocation directions in which the thresholds are exceeded using positive and negative of the time change amount of the pressing force at that time as a criterion.

2. The input device using a three-axis force sensor according to claim 1, wherein the thresholds are positive values.

3. The input device using a three-axis force sensor according to claim 1, wherein the thresholds are negative values.

4. The input device using a three-axis force sensor according to any one of claims 1 to 3, wherein the criterion is only a case where the time change amount of the pressing force is positive.

5. The input device using a three-axis force sensor according to any one of claims 1 to 3, wherein the criterion is only a case where the time change amount of the pressing force is negative.

6. The input device using a three-axis force sensor according to any one of claims 1 to 3, wherein the criterion is a case where the time change amount of the pressing force is either positive or negative.

7. The input device using a three-axis force sensor according to claim 1, wherein when the time change amounts of a plurality of the component forces in the allocation directions overlap each other in terms of time and exceed the respective thresholds, the event is activated on an assumption that the input has been performed only for an allocation direction of the allocation directions in which a time change amount of the time change amounts first exceeds a threshold of the respective thresholds.

8. The input device using a three-axis force sensor according to claim 1, wherein when the time change amounts of all the component forces in the allocation directions do not exceed the respective thresholds, and the time change amount of only the pressing force exceeds the threshold, the event is activated on an assumption that the input has been performed in a pushing direction.

9. The input device using a three-axis force sensor according to claim 1, wherein each of the time change amounts is a differential value or a high-pass filtered value.

10. The input device using a three-axis force sensor according to claim 1, wherein the three-axis force sensor includes a flexible film-type sensor.
